# EUROPÄISCHE PATENTSCHRIFT

(11) **EP 4 114 733 B1**
(45) Veröffentlichungstag und Bekanntmachung des Hinweises auf die Patenterteilung: **31.01.2024**
(21) Anmeldenummer: 21714098.7
(22) Anmeldetag: 03.03.2021
(51) Int. Cl.: B64D 11/06

(54) **FLUGGASTSITZ UND SITZREIHE**
AIRCRAFT PASSENGER SEAT, AND SEAT ROW
SIÈGE DE PASSAGER D'AÉRONEF ET RANGÉE DE SIÈGES

(30) Priorität: 05.03.2020 DE 102020106037
(43) Veröffentlichungstag der Anmeldung: 11.01.2023
(73) Patentinhaber: ZIM Aircraft Seating GmbH, 88090 Immenstaad am Bodensee (DE)
(72) Erfinder: ZIMMERMANN, Peter, 88662 Ueberlingen (DE)
(74) Vertreter: Otten, Roth, Dobler & Partner mbB Patentanwälte
(86) Internationale Anmeldenummer: PCT/EP2021/055380
(87) Internationale Veröffentlichungsnummer: WO 2021/175946

(56) Entgegenhaltungen:
- EP-A1- 1 724 194
- EP-A1- 2 565 073
- WO-A1-2017/108537
- DE-A1-102017 124 349
- US-A- 5 390 982

## Beschreibung

Die Erfindung betrifft einen Fluggastsitz mit einem Strukturbauteil und eine Sitzreihe, gebildet aus z.B. zwei solcher Fluggastsitze.

### Stand der Technik

Zur Ausstattung von Passagierflugzeugen sind Fluggastsitze und Sitzreihen mit mehreren nebeneinander angeordneten Fluggastsitzen bekannt. Die Fluggastsitze können eine Vielzahl von Ausführungsformen aufweisen.

Alle Fluggastsitze müssen Sicherheitsrichtlinien entsprechen. Gleichzeitig sollen die Sitze ein möglichst geringes Gewicht aufweisen. Außerdem ist eine kompakte Außenform erwünscht.

Der Fluggastsitz muss derart aufgebaut sein, dass er Vorgaben erfüllt, die aufgrund durch die Sicherheitsrichtlinien vorgeschriebene Tests, insbesondere Crash-Tests nachzuweisen sind. Hierzu sind stabile Verbindungen zwischen verschiedenen Bauteilen des Fluggastsitzes notwendig.

Beispielsweise ist am Fluggastsitz ein Sicherheitsgurt vorhanden. Der Sicherheitsgurt ist bevorzugt als Beckengurt ausgebildet und z.B. mit einem Gestell und/oder einem Sitzteiler des Fluggastsitzes an zum Beispiel zwei Gurtanbindungspunkten verbunden.

Aus der EP 2565 073 A1 sowie aus der US 5 390 982 A ist jeweils ein Sitz für ein Kraftfahrzeugs bekannt,welcher ein Haltegurtband aufweist.

### Aufgabe und Vorteile der Erfindung

Aufgabe der vorliegenden Erfindung ist es, einen im Hinblick auf eine erhöhte Stabilität verbesserten Fluggastsitz bereitzustellen.

Die Aufgabe wird durch die Merkmale der unabhängigen Ansprüche 1 und 12 gelöst.

Vorteilhafte und zweckmäßige Ausführungsform, Weiterbildungen und Varianten der Erfindung sind in den abhängigen Ansprüchen ausgeführt.

Nachfolgend werden alle Richtungen in Bezug zu einer Sitzrichtung angegeben, wobei unter der Sitzrichtung die Richtung zu verstehen ist, in welcher ein Fluggast blickt, wenn er auf dem Fluggastsitz Platz genommen hat.

Die Erfindung geht aus von einem .Fluggastsitz mit einem Gestell, das zur Befestigung an einem Boden an einer Fluggastkabine vorgesehen ist, wobei das Gestell einen Sitzteiler und quer zur Sitzrichtung verlaufende Holme umfasst, wobei der Sitzteiler durch die Holme gehalten ist, wobei eine Umhausung am Sitzteiler angeordnet ist, wobei die Umhausung eine Rückenlehne zumindest teilweise umgibt.

Vorzugsweise umfasst der Fluggastsitz neben dem Gestell und der Umhausung, eine Kopfstütze, eine Polsterung für eine Rückenlehne, einen Sitzboden und eine Beinauflage. Diese zum Beispiel vier wesentlichen Teile des Fluggastsitzes sind bevorzugt z.B. über Gelenke oder andere Mechanismen miteinander verbunden, vorteilhafterweise einstellbar, insbesondere gegeneinander verstellbar.

Mit unten wird der Boden der Fluggastkabine bezeichnet, während oben eine entgegengesetzte Position bezeichnet, welche insbesondere vertikal beabstandet zu unten angeordnet ist. Bevorzugterweise sind der Sitzteiler und die Holme aus einem Metallmaterial, z.B. einem Leichtmetall, vorteilhafterweise aus Aluminium, oder aus einem anderen leichten und stabilen Material, und/oder zum Beispiel aus einem Verbundwerkstoff, insbesondere aus einem Kohlefaserverbundwerkstoff hergestellt. Vorteilhafterweise sind alle Bauteile des Fluggastsitzes im Hinblick auf ihre Materialien und das damit verbundene Gewicht optimiert. Insbesondere ist auch eine Form und/oder eine Kontur der Bauteile hinsichtlich des Gewichts optimiert, so dass die Bauteile zum Beispiel Materialausnehmungen aufweisen, welche zu einer Gewichtsersparnis ebenfalls beitragen.

Der Fluggastsitz ist über das Gestell am Boden einer Fluggastkabine anordenbar. Das Gestell umfasst den Sitzteiler und die quer zur Sitzrichtung verlaufenden Holme, wobei ein erster vorderer Holm und ein zweiter, in Sitzrichtung gesehen, dahinter angeordneter Holm vorhanden sind. Vorzugsweise sind beide Holme am Sitzteiler angeordnet. Vorteilhafterweise verlaufen die zwei Holme beabstandet, insbesondere mehrheitlich parallel zueinander.

Der Sitzteiler ist als ein mechanisch stabiles Bauteil des Fluggastsitzes ausgebildet. Insbesondere ist der Sitzteiler dazu ausgelegt Kräfte, welche bei einem Crash auf den Fluggastsitz wirken, aufzunehmen und/oder in Richtung des Bodens der Fluggastkabine zu leiten und/oder in diesen abzuleiten.

Der Sitzteiler weist in Sitzrichtung gesehen eine Höhe, eine Breite und eine Tiefe auf. Die Breite des Sitzteilers, z.B. im einstelligen Zentimeterbereich, ist bevorzugt kleiner als die Tiefe des Sitzteilers. Beispielsweise ergibt sich die Höhe des Sitzteilers aus einer Abmessung in vertikaler Richtung in Bezug zum Fluggastsitz. Bevorzugt beträgt die Höhe des Sitzteilers ein Vielfaches der Breite und/oder der Tiefe des Sitzteilers.

Am Sitzteiler ist die Umhausung anordenbar. Die Umhausung umgibt zumindest teilweise die Rückenlehne des Fluggastsitzes. In einer bevorzugten Ausführungsform umfasst der Fluggastsitz die Umhausung, welche im Bereich der Rückenlehne anordenbar ist. Beispielsweise ist die Rückenlehne im Bereich der Umhausung, relativ zur Umhausung verstellbar. Die Rückenlehne ist im Bereich der Umhausung beweglich geführt, wobei die Umhausung bei einer Bewegung der Rückenlehne feststehend ist. Bevorzugterweise ist die Umhausung positionsfest und insbesondere nicht beweglich bei der Verstellung der Rückenlehne. In einer vorteilhaften Ausführungsvariante ist am Sitzteiler die Umhausung anordenbar.

Bevorzugt sind pro Fluggastsitz zwei Sitzteiler vorhanden. Beispielsweise sind die beiden Sitzteiler in Breitenrichtung beabstandet voneinander, insbesondere rechts und links seitlich, in Bezug zur Sitzrichtung am Fluggastsitz angeordnet. Bevorzugt sind die beiden Sitzteiler parallel zueinander angeordnet. Vorteilhafterweise sind zwei Ebenen jeweils aufgespannt aus der Höhe und der Tiefe des jeweiligen Sitzteilers zumindest annähernd parallel angeordnet. Insbesondere wird der Fluggastsitz an beiden Seiten durch die Sitzteiler begrenzt, vorteilhafterweise im Bereich des Sitzbodens. Bevorzugterweise ist der Sitzteiler derart mechanisch belastbar ausgeführt, dass beispielsweise am Sitzteiler die Gurtanbindungspunkte für den Sicherheitsgurt für den Fluggast anordenbar sind, z.B. anschraubbar sind. Unterhalb ist der Sitzteiler mit einer Stützfuß-Struktur mit dem Kabinenboden verbindbar.

Der Kern der Erfindung ist, dass am Sitzteiler ein Strukturbauteil angeordnet ist, wobei am Strukturbauteil ein Anbindungsorgan für einen Sicherheitsgurt eines Fluggastes angeordnet ist.

Am Sitzteiler ist das Strukturbauteil angeordnet. Das Strukturbauteil erstreckt sich oberhalb des Sitzteilers bis zu einem oberen Ende des Fluggastsitzes, insbesondere überspannt das Strukturbauteil eine Höhe der Rückenlehne. Beispielsweise ist das Strukturbauteil mittels einer Verbindungsvorrichtung am Sitzteiler anordenbar. Beispielsweise sind der Sitzteiler und das Strukturbauteil mittels der Verbindungsvorrichtung mechanisch stabil und lösbar verbunden, z.B. aufgesteckt und verschraubt und/oder vernietet. An dem Strukturbauteil ist ein Anbindungsorgan für einen Sicherheitsgurt des Fluggastes angeordnet.

Vorzugsweise ist das Anbindungsorgan an dem Strukturbauteil fixiert, bevorzugt angenietet und/oder angeschraubt und/oder angeschweißt und/oder angelötet und/oder angeklebt. Das Anbindungsorgan ist am Strukturbauteil lösbar oder unlösbar fixierbar.

Beispielsweise ist das Strukturbauteil aus einem leichten und mechanisch stabilen Material aufgebaut, z.B. aus Metall, insbesondere Aluminium und/oder einem Verbundwerkstoff, insbesondere einem Kohlefaserverbundwerkstoff.

Bevorzugterweise ist das Strukturbauteil derart ausgelegt, dass es Kräfte, welche bei einem Lastfall, insbesondere bei einem Crash z.B. am Sicherheitsgurt eingeleitet und auf das Anbindungsorgan übertragen werden, aufnehmen und/oder weiterleiten kann.

Bevorzugt verdeckt die Umhausung das Strukturbauteil, welches zum Beispiel innerhalb der Umhausung angeordnet ist.

Beispielsweise ist das Strukturbauteil einstückig ausgeführt, z.B. schalenförmig, insbesondere schalenartig innerhalb der Umhausung. Auch eine mehrteilige Ausgestaltung des Strukturbauteils ist möglich.

In einer vorteilhaften Ausführungsform sind an der Umhausung zwei Anbindungsorgane für den Sicherheitsgurt angeordnet.

Beispielsweise sind an der Umhausung ein erstes und ein zweites Anbindungsorgan für den Sicherheitsgurt angeordnet. Bevorzugt ist das zweite Anbindungsorgan mechanisch stabil an der Umhausung angebracht, z.B. angeschraubt oder angenietet. Vorteilhafterweise ist das erste Anbindungsorgan an dem Strukturbauteil angeordnet. In einer bevorzugten Ausführungsform ist das Anbindungsorgan als ein Umlenkungselement und/oder ein Befestigungselement für ein Gurtband des Sicherheitsgurts ausgeführt.

In einer bevorzugten Ausführungsvariante bilden mehrere Strukturbauteile eine Strukturbaugruppe, wobei die Strukturbaugruppe mindestens ein horizontales und zwei vertikale Strukturbauteile umfasst. Vorzugsweise umfasst ein Fluggastsitz mehrere Strukturbauteile, welche eine Strukturbaugruppe bilden. Die Ausrichtung der Strukturbauteile bezieht sich auf die Ausrichtung des Fluggastsitzes wie er von einem Fluggast genutzt wird, also in einem Nutzzustand.

Die Strukturbauteile sind beispielsweise plattenförmig und/oder flächig ausgeführt, wobei jedes Strukturbauteil eine Länge, eine Breite und eine Höhe aufweist. Insbesondere weisen die Strukturbauteile eine lange und eine kurze Seite und eine Dicke auf. Beispielsweise sind die lange und die kurze Seite jeweils ein Vielfaches der Dicke des Strukturbauteils. Vorteilhafterweise wird aus der langen und der kurzen Seite eine Ebene aufgespannt.

Das vertikale Strukturbauteil ist derart angeordnet, dass es in seiner Hauptrichtung, mit der langen Seite, in vertikaler Richtung bezogen auf die Sitzrichtung ausgerichtet ist. Das horizontale Strukturbauteil ist derart angeordnet, dass es in seiner Hauptrichtung, mit der langen Seite, in horizontaler Richtung, bezogen auf die Sitzrichtung ausgerichtet ist.

Vorzugsweise sind die zwei vertikalen.Strukturbauteile beabstandet voneinander angeordnet, insbesondere in horizontalter Richtung gegenüberliegend und beabstandet. Bevorzugt sind die Ebenen, aufgespannt aus langer und kurzer Seite gegenüberliegend, insbesondere annähernd parallel ausgerichtet.

Beispielsweise ist das horizontale Strukturbauteil zwischen den beiden vertikalen Strukturbauteilen angeordnet, bevorzugt winklig zu den zwei vertikalen Strukturbauteilen. In einer bevorzugten Ausführungsform ergibt sich eine leiterförmige Anordnung der Strukturbauteile. Insbesondere ist das horizontale Strukturbauteil winklig, insbesondere rechtwinklig zu beiden vertikalen Strukturbauteilen angeordnet. Vorteilhafterweise sind die Strukturbauteile jeweils miteinander verbunden, z.B. mittels Winkel und Schrauben und/oder Niete.

Bevorzugterweise sind die vertikalen Strukturbauteile mittels der Verbindungsvorrichtung mit den Sitzteilern des Fluggastsitzes verbunden.

Vorzugsweise sind die vertikalen Strukturbauteile und das horizontale Strukturbauteil aus Aluminium, insbesondere einer Alu-Well-Platte, insbesondere eine Sandwich Alu-Well-Platte gefertigt.

Beispielsweise ist das Anbindungsorgan an dem horizontalen Strukturbauteil angeordnet.

Vorteilhafterweise ist das erste Anbindungsorgan an dem horizontalen Strukturbauteil angeordnet.

In einer bevorzugten Ausführungsform ist zwischen zwei vertikalen Strukturbauteilen eine Querstrebe angeordnet, wobei die Querstrebe als u-Profil ausgebildet ist.

Vorzugsweise ist die Querstrebe zusätzlich zu einem horizontalen Strukturbauteil zwischen den vertikalen Strukturbauteilen angeordnet. Eine vorteilhafte Ausgestaltung der Querstrebe ergibt sich mit einem eckigen Querschnitt, insbesondere mit einem rechteckigen und/oder quadratischen, bevorzugt u-förmigen, mit einer offenen Seite der Querstrebe. Vorteilhafterweise ist die Querstrebe aus einem mechanisch stabilen Material gefertigt, insbesondere Metall, z.B. Stahl und/oder Aluminium und/oder einem Verbundwerkstoff, insbesondere einem Kohlefaserverbundwerkstoff.

Beispielsweise ist an einem der vertikalen Strukturbauteile eine Durchführung, z.B. eine Öffnung vorhanden, in welche die Querstrebe eingepasst werden kann.

In einer vorteilhaften Ausführungsform liegt die Querstrebe an dem zweiten vertikalen Strukturbauteil an einer schmalen Seite des Strukturbauteils an.

Vorzugsweise sind die Querstrebe und die vertikalen Strukturbauteile formschlüssig angeordnet, insbesondere formschlüssig miteinander verbunden.

Vorteilhafterweise ist die Querstrebe mit dem vertikalen Strukturbauteil über z.B. einen Winkel und Schrauben und/oder Niete verbunden, insbesondere fixiert.

In einer weiteren vorteilhaften Ausgestaltung wird die Querstrebe von einem Anbindungselement an mindestens einer Seite berührt. Beispielsweise ist das Anbindungselement als ein Anbindungsblech ausgebildet. Vorzugsweise ist das Anbindungselement geformt, insbesondere derart ausgeformt, insbesondere ausgebogen, um die Querstrebe aufzunehmen. Bevorzugterweise ist das Anbindungselement oberhalb und/oder unterhalb der Querstrebe an den vertikalen Strukturbauteilen angeordnet, insbesondere angenietet und/oder angeschraubt. Vorzugsweise sind die Querstrebe und das Anbindungselement formschlüssig angeordnet, insbesondere formschlüssig miteinander verbunden.

Weiter bevorzugt ist, dass an dem Anbindungselement das Anbindungsorgan für den Sicherheitsgurt angeordnet ist. Vorzugsweise ist das zweite Anbindungsorgan für den Sicherheitsgurt am Anbindungselement angeordnet, insbesondere befestigt und/oder fixiert, z.B. angeschraubt und/oder angenietet.

Vorzugsweise besteht das Anbindungselement aus einem deformierbaren Material, z.B. Metall, wobei das Anbindungselement Energie bei einem Crash aufnehmen kann. In einer vorteilhaften Ausgestaltung besteht das Anbindungselement aus einem verformbaren, insbesondere deformierbaren Material. In einer vorteilhaften Ausgestaltung ist das Anbindungselement dazu ausgelegt Energie aus dem, insbesondere Lastfall als z.B. Verformungsenergie durch eine gewählte und gezielte Verformung eines Abschnitts des Anbindungselements, aufzunehmen. Bevorzugterweise ist das Anbindungselement derart ausgestaltet, dass es die Energie welche bei dem Lastfall und/oder Crash auf den Sicherheitsgurt und damit über das Anbindungsorgan auf das Anbindungselement wirkt, aufnehmen, und/oder auf die Querstrebe und/oder die Strukturbauteile weiterleiten kann. Die Energieaufnahme im Lastfall und/oderbei dem Crash führt zu einer insbesondere definierten Deformation und/oder Verformung des Anbindungselements.

Bevorzugt ist das am Anbindungselement angeordnete Anbindungsorgan als eine Gurtumlenkung ausgebildet. Beispielsweise ist die Gurtumlenkung als ein ösenförmiges und/oder ringförmiges, vorzugsweise ovales, insbesondere geschlossenes Element ausgeführt. Vorzugsweise ist die Gurtumlenkung derart ausgeführt, dass der Sicherheitsgurt durch das ringförmige Element geführt ist. In einer bevorzugten Ausführungsform dient die Gurtumlenkung zur Richtungsänderung des Sicherheitsgurts, insbesondere in eine weitere Richtung, winklig zur vertikalen Richtung, z.B. über eine Schulter des Fluggastes. Beispielsweise ist das Anbindungsorgan am Anbindungselement fixiert, insbesondere mittels eine Schraube und/oder einem Niet.

Vorteilhafterweise ist das an dem horizontalen Strukturbauteil angeordnete Anbindungsorgan als ein Gurtroller ausgebildet. Beispielsweise ist der Gurtrolle dazu ausgelegt den Sicherheitsgurt aufzunehmen, insbesondere von dem Fluggast nicht verwendeten Sicherheitsgurt zu lagern. Vorteilhafterweise ist der Gurtroller mit einem Wickelmechanismus ausgestattet, wobei der Wickelmechanismus dazu ausgelegt ist, den Sicherheitsgurt zu führen, insbesondere zu spannen und/oder aufzuwickeln. Bevorzugterweise ist der Gurtroller dazu ausgelegt, den Sicherheitsgurt selbstständig aufzuwickeln, wenn der Sicherheitsgurt nicht verwendet wird, insbesondere wenn ein Ende des Sicherheitsgurts nicht in einem Gurtschloss fixiert ist.

Bevorzugterweise handelt es sich bei dem Sicherheitsgurt um einen zusätzlichen Sicherheitsgurt. Beispielsweise ist der Sicherheitsgurt zusätzlich zu einem Beckengurt vorhanden. Der Beckengurt wird beispielsweise an den beiden Gurtanbindungen am Sitzteiler befestigt.

In einer vorteilhaften Ausführungsform ist der zusätzliche Sicherheitsgurt dazu vorgesehen, über den Oberkörper eines Fluggasts geführt zu werden, insbesondere ist der zusätzliche Sicherheitsgurt dazu ausgelegt, den Aufprall eines Kopfs des Fluggast bei einem Crash zu bremsen, insbesondere in einem vor dem Fluggast angeordneten weiteren Fluggastsitz, bzw. einer Sitzreihe. Vorteilhafterweise ist der zusätzliche Sicherheitsgurt vom Fluggast nur in bestimmten Phasen des Flugs zu verwenden, insbesondere während einem Rollen, einem Start und einer Landung des Flugzeugs. Vorzugsweise wird der zusätzliche Sicherheitsgurt mit dem Gurtschloss fixiert, insbesondere geschlossen. Bei dem Sicherheitsgurt handelt es sich um einen Mehr-Punkt-Sicherheitsgurt, insbesondere bei gemeinsamer Verwendung mit dem Beckengurt. Für einen Fluggast ergibt sich durch die vorteilhafte Ausgestaltung ein ähnliches Gefühl wie bei einem 3-Punkt-Gurt in einem Kraftfahrzeug, insbesondere PKW.

Bevorzugterweise umfasst eine Sitzreihe mindestens zwei Fluggastsitze nach einer der vorhergehend aufgeführten Ausgestaltungsformen. Vorzugsweise besteht die Sitzreihe aus zwei Fluggastsitzen, wobei die zwei Fluggastsitze ein gemeinsames Gestell zur Befestigung am Kabinenboden aufweisen. Beispielsweise sind an der Stützfuß-Struktur die Holme angeordnet, an welchen wiederum die Sitzteiler angeordnet sind. Die, beispielsweise, zwei Fluggastsitze umfassen gemeinsame Holme. In einer bevorzugten Ausführungsvariante sind an den Holmen für jeden Fluggastsitz zwei Sitzteiler angeordnet. Bevorzugt sind an den Sitzteilern über die Verbindungsvorrichtung die Strukturbauteile angeordnet. Vorzugsweise sind an dem Strukturbauteil und an dem Anbindungselement Aufnahmen für den zusätzlichen Sicherheitsgurt angeordnet.

### Figurenbeschreibung

Weitere vorteilhafte Merkmale, Ausgestaltungen, Varianten und Ausführungsformen sind anhand eines schematischen Ausführungsbeispiels näher erläutert.

Im Einzelnen zeigt:
- Figur 1: in einer perspektivischen Ansicht schräg von vorne eine Sitzreihe mit zwei Fluggastsitzen jeweils umfassend einen Sitzboden, eine Rückenlehne samt rückseitiger Umhausung und eine Beinauflage,
- Figur 2: die Sitzreihe gemäß Figur 1 in einer perspektivischen Ansicht von schräg hinten,
- Figur 3: eine Grundkonstruktion der Sitzreihe 1 aus Figur 1 in einer perspektivischen Ansicht von schräg vorne.

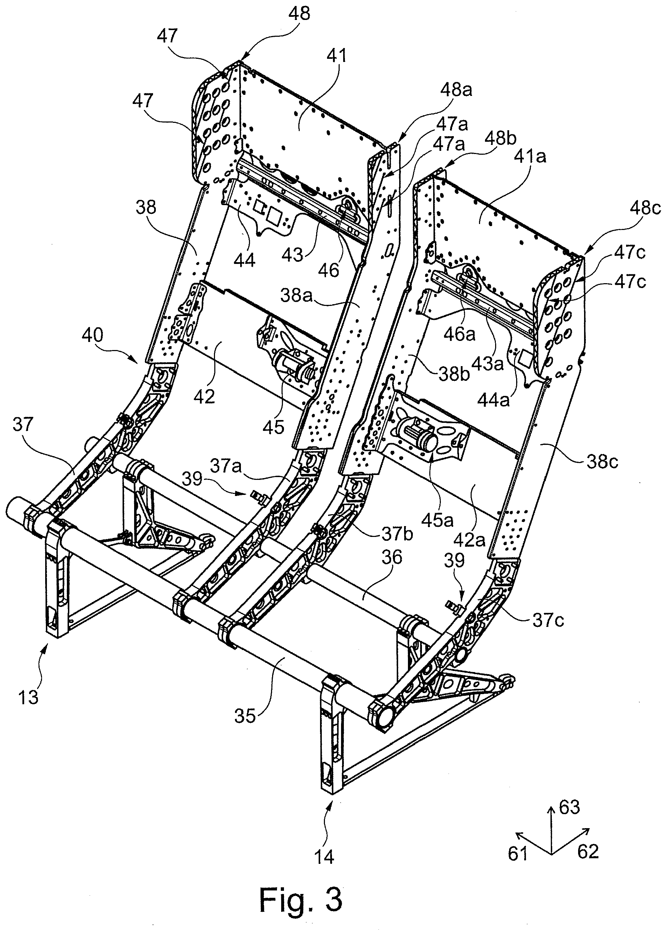

Für einen nutzbaren, funktionsfähigen Fluggastsitz sind weitere Bauteile notwendig, welche in den Figuren 3 bis 5 nicht dargestellt sind. Es wird nur auf die für die Verbindungsvorrichtung notwendigen Bauteile eingegangen.

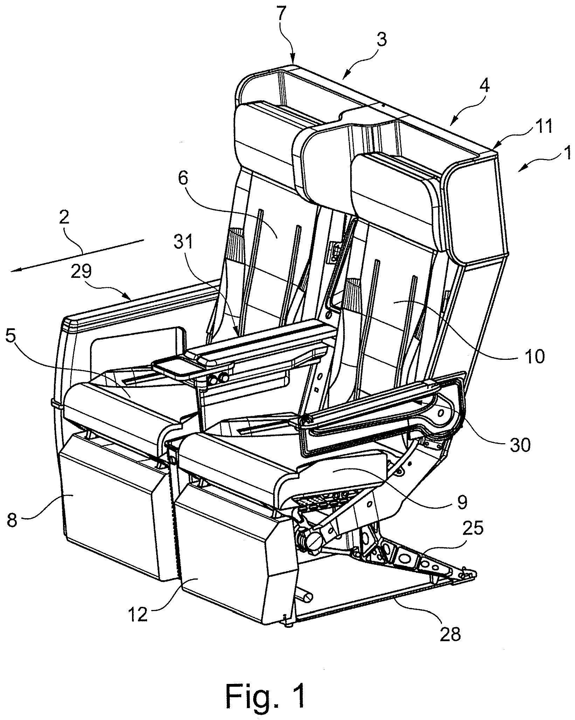

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Die Fluggastsitze 3 und 4 sind über zwei Stützbeine 13 und 14 an einem Kabinenboden einer Flugkabine eines dazugehörigen Flugzeuges montierbar.

Das Stützbein 13 weist hierfür an einem unteren Endbereich 16 einer vorderen Strebe 15 eine Montagestelle 17 und eine weitere Montagestelle 20 an einem unteren Endbereich 19 einer hinteren Strebe 18 auf. Zwischen den Endbereichen 16 und 19 ist ein Verstrebungselement 21 vorgesehen.

Das Stützbein 14 weist an einem unteren Endbereich 23 einer vorderen Strebe 22 eine Montagestelle 24 und eine weitere Montagestelle 27 an einem unteren Endbereich 26 einer hinteren Strebe 25 auf. Zwischen den Endbereichen 23 und 26 ist ein Verstrebungselement 28 vorgesehen.

Die Sitzreihe 1 weist zudem eine äußere Armlehne 29 seitlich am Fluggastsitz 3 und eine äußere Armlehne 30 seitlich am Fluggastsitz 4 auf. Zwischen den beiden Fluggastsitzen 3 und 4 ist vorzugsweise auf Höhe der beiden äußeren Armlehnen 29 und 30 eine Konsole 31 vorhanden, welche von einem Fluggast ebenfalls als Armauflage genutzt werden kann.

In einer Schalenform der jeweiligen Umhausung 7 bzw. 11 ist die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

Die Umhausungen 7 und 11 sind mit weiteren Elementen versehen, z. B. rückseitig jeweils mit Zusatzfunktionen versehen. In einem oberen rückseitigen Bereich der Umhausungen 7, 11 ist beispielsweise jeweils eine Multimedia-Einheit 32 für digitale Medien vorgesehen, zum Beispiel mit einem elektronischen Ein- und Ausgabegerät bzw. mit einem Touchscreen.

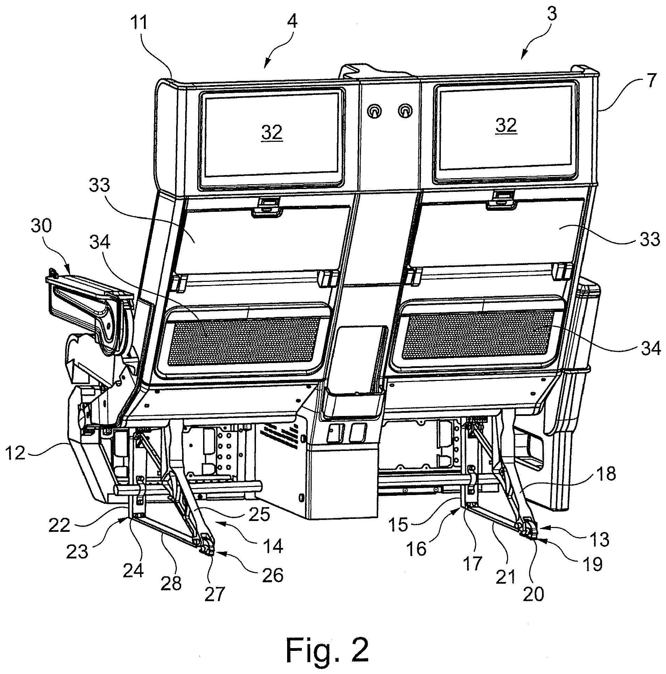

In einem unterhalb an die Multimedia-Einheit 32 anschließenden bzw. mittleren Bereich ist zum Beispiel jeweils ein klappbares Ablageelement 33 wie ein Tablett-Tisch mit einer Tischplatte ausgebildet. In Fig. 2 sind die Ablageelemente 33 in einer nach oben herangeklappten, vertikal stehenden und gesicherten Nichtnutzungsstellung dargestellt.

Unterhalb des jeweiligen klappbaren Ablageelements 33 ist ein Staufach 34 beispielswiese zur Unterbringung von Zeitschriften bzw. Prospekten oder anderen Gegenständen vorhanden.

Figur 3 zeigt in einer perspektivischen Ansicht eine Grundkonstruktion der Sitzreihe 1 der Fluggastsitze 3, 4 gemäß den Figuren 1 und 2. Die Grundkonstruktion umfasst beispielsweise ein Gestell, Strukturbauteile 38, 38a, 38b, 38c und Sitzteiler 37, 37a, 37b, 37c. Beispielsweise sind an einem Gestell, welches die Stützbeine 13, 14, umfasst, zwei Holme 35, 36 angeordnet. Vorteilhafterweise sind der vordere Holm 35 und der hintere Holm 36 annäherungsweise parallel zueinander ausgerichtet. Bevorzugt ist an den Holmen 35 und 36 ein Sitzteiler 37 angeordnet. Bevorzugterweise sind zwei Sitzteiler 37, 37a für den Fluggastsitz 3 und die weiteren Sitzteiler 37b, 37c für den Fluggastsitz 4 vorhanden. Insbesondere weisen die Sitzteiler 37 bis 37c verschiedene Materialausnehmungen auf. Die Sitzteiler 37, 37a, 37b, 37c sind vorzugsweise gleich, insbesondere identisch aufgebaut. Der Sitzteiler 37 ist insbesondere als flaches, winkliges, beispielsweise bogenförmiges Bauteil ausgeführt. Beispielsweise ist am oberen Ende des Sitzteilers 37 eine Verbindungsvorrichtung 40 (nicht vollständig dargestellt) angeordnet.

In einer vorteilhaften Ausführungsform ist an jedem Sitzteiler 37, 37a, 37b, 37c eine Gurtanbindung 39 für einen Sicherheitsgurt des Fluggasts angeordnet, insbesondere sind alle vier angeordneten Gurtanbindungen 39 gleichartig ausgeführt. Beispielsweise ist die Gurtanbindung 39 an den Sitzteilern 37 bis 37c angeschraubt, vorteilhafterweise ist an der Gurtanbindung 39 ein Sicherheitsgurt mit insbesondere einem Gurtschloss und/oder einem auf das Gurtschloss abgestimmtem Haken und/oder Öse angebracht.

Vorteilhafterweise sind die Strukturbauteile 38, 38a, 38b, 38c flächig und/oder plattenförmig ausgebildet, insbesondere weisen sie eine Breite, eine Tiefe und eine Höhe auf. Die Breite ist in dem gezeigten Ausführungsbeispiel,im Bereich weniger Zentimeter. Die Tiefe der Strukturbauteile ist ein Vielfaches der Breite. Die Höhe eines jeweiligen Strukturbauteils 38 - 38c ist ebenfalls ein Vielfaches der Breite, insbesondere ist die Höhe größer als die Tiefe. Alle Richtungen sind bezogen auf die drei Raumrichtungen Breite 61, Tiefe 62 und Höhe 63, dargestellt in Figur 3. Vorteilhafterweise ist die Tiefe 62 parallel zur Sitzrichtung 2 ausgerichtet.

Bevorzugterweise sind die Strukturbauteile 38, 38a, 38b, 38c aus Aluminium, beispielsweise einer Sandwich-Konstruktion, insbesondere aus einer Alu-Well-Platte gefertigt, insbesondere ausgeschnitten. In einer bevorzugten Ausführungsvariante weisen die Alu-Well-Platten im Inneren eine Verbindungsstruktur (48, 48a, 48b, 48c), ausgebildet als eine wellenförmige Struktur auf, welche insbesondere Wellenberge und/oder Wellentäler umfasst, welche z.B. jeweils eine Scheitellinie (47, 47a, 47c) aufweisen. Vorteilhafterweise ist die lange Seite der Strukturbauteile 38 bis 38c parallel zu der Scheitellinie der Wellenberge und/oder - täler ausgerichtet. Eine Außenoberfläche der Alu-Well-Platte ist flächig ausgebildet, insbesondere als eine Deckplatte, welche die innenliegende Struktur der Alu-Well-Platte verdeckt.

In der dargestellten Ausführungsform ist das Strukturbauteil 38 bzw. 38c an der linken bzw. rechten Außenseite der Sitzreihe aus zwei Fluggastsitzen angeordnet. Bevorzugt sind die beiden Strukturbauteile 38 und 38c gleich geformt, insbesondere weisen die Strukturbauteile 38 und 38c in ihrem jeweiligen oberen Endbereich, bezogen auf die Höhenrichtung 63, eine Verbreiterung im Vergleich zur Ausdehnung, in Tiefenrichtung 62 betrachtet, im mittleren und unteren Bereich auf.

Die Strukturbauteile 38a und 38b sind in der gezeigten Ausführungsvariante mittig in der Sitzreihe aus Fluggastsitz 3 und 4 angeordnet. Beispielsweise ist das Strukturbauteil 38a die rechte Begrenzung des Fluggastsitzes 3 und das Strukturbauteil 38b die linke Begrenzung des Fluggastsitzes 4. Die beiden Strukturbauteile 38a und 38b sind vorzugsweise gleich ausgeführt, insbesondere weisen sie die gleiche Form auf. Bevorzugt ist das Strukturbauteil 38a bzw. 38b an seinem unteren Endbereich, in Höhenrichtung 63, verbreitert ausgeführt, insbesondere zu einem mittleren und/oder oberen Bereich des Strukturbauteils 38a bzw. 38b.

In der dargestellten Ausführungsform ist zum Beispiel an zwei Strukturbauteilen 38 und 38a ein Verbindungsstrukturbauteil 41 angeordnet. Bevorzugt ist das Verbindungsstrukturbauteil 41 an dem oberen Ende der vertikal ausgerichteten Strukturbauteile 38, 38a angebracht.

Ein Verbindungsstrukturbauteil 41a ist zwischen den vertikal ausgerichteten Strukturbauteilen 38b und 38c angeordnet. Vorzugsweise wirkt das Verbindungsstrukturbauteil 41 bzw. 41a aussteifend und/oder mechanisch stabilisierend mit den beiden vertikalen Strukturbauteilen 38 und 38a, bzw. 38b und 38c zusammen. Beispielsweise sind das Verbindungsstrukturbauteil 41 und die Strukturbauteile 38, 38a mittels Verbindungsmitteln, z.B. Winkeln und/oder Schrauben und/oder Niete miteinander verbunden. Ebenso ist eine Verbindung von Verbindungsstrukturbauteil und Strukturbauteil mittels, z.B. löten, schweißen und/oder kleben, insbesondere materialschlüssig, möglich.

Bevorzugt weist das Strukturbauteil 38a, bzw. 38b Einschnitte und/oder Ausnehmungen auf. Das Verbindungsstrukturbauteil 41, bzw. 41a ist dazu ausgelegt in diese Ausnehmungen angeordnet, insbesondere eingepasst zu werden.

Alternativ ist eine einstückige Ausbildung der Strukturbauteile 38 und 38a mit dem Verbindungsstrukturbauteil 41 möglich. Für das Verbindungsbauteil 41a gilt entsprechendes.

Vorzugsweise ist das Verbindungsstrukturbauteil 41 bzw. 41a als ein plattenförmiges Element mit beispielsweise einer annähernd rechteckigen Form, mit einer langen und einer kurzen Seite und einer Dicke ausgebildet. Vorzugsweise sind die Verbindungsstrukturbauteile 41 und 41a aus einer Metallplatte, insbesondere einer Alu-Well-Platte und/oder einem Verbundmaterial gefertigt. Beispielsweise ist das Verbindungsstrukturbauteil derart ausgerichtet, dass die lange Seite des Verbindungsstrukturbauteils 41 bzw. 41a in der horizontalen Richtung bezogen auf den Fluggastsitz angeordnet ist. Die lange Seite des Verbindungsstrukturbauteils 41 bzw. 41a ist in Richtung der Breite 61 ausgerichtet.

In der in Figur 3 gezeigten Ausführungsform schließt das Verbindungsstrukturbauteil 41 mit dem Sitzteiler 38 an einem auf die Sitzrichtung 2 bezogenen, hinteren Ende ab. In Sitzrichtung 2 bezogen ist das Verbindungsstrukturbauteil 41 etwas nach hinten versetzt zum Strukturbauteil 38a angeordnet. Die Ausnehmungen bzw. Einschnitte in welche das Verbindungsstrukturbauteil 41 am Strukturbauteil 38a eingepasst ist, sind insbesondere zwischen einer Mitte und einem hinteren Ende des Strukturbauteils 38a, in Sitzrichtung 2 gesehen, angeordnet.

An der Grundkonstruktion des Fluggastsitzes 4 ist in Figur 3 das Verbindungsstrukturbauteil 41a in das Strukturbauteil 38b eingepasst, insbesondere nach dem gleichen Prinzip wie das Verbindungsstrukturbauteil 41 mit dem Strukturbauteil 38a verbunden ist. Das Verbindungsstrukturbauteil 41a schließt in der gezeigten Ausführungsvariante mit dem Strukturbauteil 38c in einem hinteren Bereich, insbesondere am hinteren Ende des Strukturbauteils 38a, in Sitzrichtung 2 bzw. Tiefenrichtung 62 gesehen, mit diesem ab.

Vorteilhafterweise sind die Verbindungsstrukturbauteile 41 und 41a mit den jeweiligen Strukturbauteilen 38, 38a, 38b, 38c über Verbindungsmittel, insbesondere Winkel und/oder Schrauben und/oder Niete verbunden.

In der in Figur 3 gezeigten Ausführungsform ist zwischen den Strukturbauteilen 38 und 38a der Grundkonstruktion des Fluggastsitzes 3 ein weiteres horizontales Strukturbauteil 42 angeordnet. Das horizontale Strukturbauteil 42 ist an dem unteren Ende der Strukturbauteile 38 und 38a zwischen diesen angeordnet. Vorzugsweise befindet sich das horizontale Strukturbauteil 42 im Bereich des unteren Rückens eines Fluggastes, wenn dieser auf dem Fluggastsitz 3 Platz genommen hat. Das horizontale Strukturbauteil 42 ist vorteilhafterweise aus Aluminium, insbesondere aus einer Alu-Well-Platte ausgeführt. Bevorzugt ist eine Wellenstruktur in der Alu-Well-Platte derart angeordnet, dass eine Scheitellinie (47, 47a, 47c) eines Wellenbergs und/oder eines Wellentals parallel zu einer langen Seite des horizontalen Strukturbauteils 42 ausgerichtet ist. Die lange Seite des horizontalen Strukturbauteils 42 ist vorteilhafterweise in Richtung der Breite 61 ausgerichtet, insbesondere parallel.

Beispielsweise ist an der Grundkonstruktion des Fluggastsitzes 4 zwischen den Sitzteilern 38b und 38c ebenfalls ein horizontales Strukturbauteil 42a angeordnet. Das horizontale Strukturbauteil 42a ist insbesondere gleichartig bzw. identisch wie das horizontale Strukturbauteil 42 ausgeführt.

Am Strukturbauteil 42 bzw. 42a ist jeweils ein Anbindungsorgan für einen Sicherheitsgurt vorgesehen, insbesondere ist das Anbindungsorgan als ein Gurtroller 45 bzw. 45a ausgeführt.

Beispielsweise ist der Gurtroller 45 am horizontalen Strukturbauteil 42 angeordnet, insbesondere angeschraubt und/oder angenietet. Vorzugsweise ist der Gurtroller 45 auf dem horizontalen Strukturbauteil 42, in Breitenrichtung gesehen, näher am Strukturbauteil 38a als am Strukturbauteil 38 angeordnet. Bevorzugt ist der Gurtroller 45 auf einem Montageelement, z.B. einem Montageblech angeordnet, insbesondere mittels des Montagelements mit dem horizontalen Strukturbauteil 42 verbunden.

Bevorzugterweise ist der Gurtroller 45a am horizontalen Strukturbauteil 42a angeordnet, insbesondere angeschraubt und/oder angenietet. Vorzugsweise ist der Gurtroller 45a auf dem horizontalen Strukturbauteil 42a, in Breitenrichtung gesehen, näher am Strukturbauteil 38b als am Strukturbauteil 38c angeordnet.

Unterhalb des Verbindungstrukturbauteils 41 bzw. 41a ist ein Anbindungselement 44 bzw. 44a, insbesondere in Form eines Anbindungsblechs angeordnet.

Vorteilhafterweise ist ebenfalls unterhalb in Höhenrichtung 63 gesehen, eine Querstrebe 43 bzw. 43a angeordnet. Die Querstrebe 43 ist vorzugsweise als ein u-profil ausgeführt. Beispielsweise ist die Querstrebe 43, insbesondere als eine cross-bar aus Aluminium und/oder Stahl ausgebildet.

Das Anbindungselement 44 ist vorzugsweise als ein deformierbares, z.B. plastisch verformbares Anbindungsblech ausgeführt, welches Energie durch eine, insbesondere definierte plastische, Verformung in einem Lastfall aufnehmen kann. Vorteilhafterweise ist das Anbindungselement 44 mit den beiden Strukturbauteilen 38 und 38a des Fluggastsitzes 3 verbunden, insbesondere ist das Anbindungselement 44 mittels Verbindungsmitteln, z.B. Schrauben und/oder Niete an das Strukturbauteil 38 bzw. 38a angebracht.

Bevorzugterweise umschließt das Anbindungselement 44 die Querstrebe 43 an einer Seite der u-Form. Insbesondere schließt das Anbindungselement 44 die u-Form der Querstrebe 43 zu einem Hohlkörper ab. Beispielsweise wird eine offene Rückseite der Querstrebe 43 durch das Anbindungselement 44 überbrückt.

In der in Figur 3 dargestellten Ausführungsform ist die Querstrebe 43 an einer, in Tiefenrichtung 62 gesehen, hinteren Seite offen.

Die Querstrebe 43 ist vorzugsweise in eine Ausnehmung am Strukturbauteil 38a eingepasst, insbesondere formschlüssig eingefügt. Am Strukturbauteil 38 liegt die Querstrebe 43 bevorzugt an der in Tiefenrichtung 62 gesehenen, hinteren Seite an, insbesondere weist die hintere, schmale Seite des Strukturbauteils 38 eine Einbuchtung, insbesondere für die Querstrebe 43, auf.

Vorzugsweise ist das Anbindungselement 44 ausgebogen, insbesondere u- förmig. Beispielsweise ist das Anbindungselement 44 als ein Biegeblechteil ausgeführt. Bevorzugt ist die Querstrebe 43 in der Ausbuchtung des Anbindungselements 44 angeordnet. Vorteilhafterweise ergibt sich eine, über die wesentliche Breite des Fluggastsitzes geschlossene, Hohlform aus Querstrebe 43 und eines überdeckenden Abschnitts des Anbindungselements 44.

Bevorzugterweise ist am Anbindungselement 44 ein Anbindungsorgan für den Sicherheitsgurt des Fluggasts angeordnet, insbesondere ausgebildet als Gurtumlenkung 46. Am Anbindungselement 44 ist die Gurtumlenkung 46 angeordnet. Bevorzugt umfasst die Gurtumlenkung 46 eine Befestigungsstelle und ein insbesondere Ösen-förmiges Umlenkelement, welches derart ausgestaltet ist, dass der Sicherheitsgurt durch das ösen-förmige Umlenkelement geführt wird und gleichzeitig Kräfte welche über den Sicherheitsgurt auf die Gurtumlenkung 46 wirken, geführt, insbesondere abgeleitet werden können.

Vorzugsweise ist die Befestigungsstelle der Gurtumlenkung 46 mittels eine Schraube und/oder einem Niet an dem Anbindungselement 44 angeordnet, insbesondere verbunden.

In der vorteilhaften, dargestellten Ausführungsform sind das Anbindungselement 44 und die Befestigungsstelle der Gurtumlenkung 46 dazu ausgelegt Energie aufzunehmen und/oder durch eine, insbesondere gezielte Deformation, z.B. plastische Verformung der Befestigungsstelle der Gurtumlenkung 46 und/oder des Anbindungselements 44 abzubauen.

Die Gurtumlenkung 46 ist bevorzugt in Breitenrichtung 61 näher am Strukturbauteil 38a angeordnet.

Entsprechendes gilt für die Gurtumlenkung 46a, welche am Anbindungselement 44a angebracht ist.

Der in Figur 3 nicht dargestellte Sicherheitsgurt des Fluggasts verläuft vom Gurtroller 45 nach oben, in Höhenrichtung 63, zur Gurtumlenkung 45 und dann z.B. über eine Schulter des Fluggasts und den Oberkörper des Fluggasts nach unten. Dieser Sicherheitsgurt ist als zusätzlicher Sicherheitsgurt zum Beckengurt vorhanden. An dem Beckengurt, welcher über ein Gurtschloss schließbar ist, ist auf der zusätzliche Sicherheitsgurt fixierbar, insbesondere im Gurtschloss des Beckengurts.

### Bezugszeichenliste

| | | | |
|---|---|---|---|
| 1 | Sitzreihe | 37a | Sitzteiler |
| 2 | Sitzrichtung | 37b | Sitzteiler |
| 3 | Fluggastsitz | 37c | Sitzteiler |
| 4 | Fluggastsitz | 38 | Strukturbauteil |
| 5 | Sitzboden | 38a | Strukturbauteil |
| 6 | Rückenlehne | 38b | Strukturbauteil |
| 7 | Umhausung | 38c | Strukturbauteil |
| 8 | Beinauflage | 39 | Gurtanbindung |
| 9 | Sitzboden | 40 | Verbindungs-vorrichtung |
| 10 | Rückenlehne | | |
| 11 | Umhausung | 41, 41a | Verbindungs-strukturbauteil |
| 12 | Beinauflage | | |
| 13, 14 | Stützbein . | 42, 42a | horizontales Strukturbauteil |
| 15 | Strebe | | |
| 16 | Endbereich | 43, 43a | Querstrebe |
| 17 | Montagestelle | 44, 44a | Anbindungselement |
| 18 | Strebe | 45, 45a | Gurtroller |
| 19 | Endbereich | 46, 46a | Gurtumlenkung |
| 20 | Montagestelle | 47 | Linie |
| 21 | Verstrebungselement | 47a | Linie |
| 22 | Strebe . | 47c | Linie |
| 23 | Endbereich | 48 | Verbindungsstruktur |
| 24 | Montagestelle | 48a | Verbindungsstruktur |
| 25 | Strebe | 48b | Verbindungsstruktur |
| 26 | Endbereich | 48c | Verbindungsstruktur |
| 27 | Montagestelle | | |
| 28 | Verstrebungselement | 49 | bis 60 nicht verwendet |
| 29, 30 | Armlehne | | |
| 31 | Konsole | | |
| 32 | Multimedia-Einheit | 61 | Breite |
| 33 | Ablageelement | 62 | Tiefe |
| 34 | Staufach | 63 | Höhe |
| 35 | vorderer Holm | | |
| 36 | hinterer Holm | | |
| 37 | Sitzteiler | | |

## Patentansprüche

1. Fluggastsitz (3, 4) mit einem Gestell, das zur Befestigung an einem Boden an einer Fluggastkabine vorgesehen ist, wobei das Gestell einen Sitzteiler (37, 37a, 37b, 37c) und quer zur Sitzrichtung verlaufende Holme (35, 36) umfasst, wobei der Sitzteiler (37, 37a, 37b, 37c) durch die Holme (35, 36) gehalten ist, wobei eine Umhausung (7, 11) am Sitzteiler (37, 37a, 37b, 37c) angeordnet ist, wobei die Umhausung (7, 11) eine Rückenlehne (6) des Fluggastsitz (3, 4) zumindest teilweise umgibt, wobei die Rückenlehne im Bereich der Umhausung relativ zur Umhausung beweglich geführt ist, wobei die Umhausung bei einer Bewegung der Rückenlehne feststehend ist, wobei am Sitzteiler (37, 37a, 37b, 37c) ein Strukturbauteil (38, 38a, 38b, 38c) angeordnet ist, wobei am Strukturbauteil (42, 42a) ein Anbindungsorgan (45, 45a) für einen Sicherheitsgurt eines Fluggastes angeordnet ist.

2. Fluggastsitz (3, 4) nach Anspruch 1, **dadurch gekennzeichnet, dass** an der Umhausung (7, 11) zwei Anbindungsorgane (45, 45a, 46, 46a) für den Sicherheitsgurt angeordnet sind.

3. Fluggastsitz (3, 4) nach einem der vorhergehenden Ansprüche, **dadurch gekennzeichnet, dass** mehrere Strukturbauteile (38, 38a, 38b, 38c, 41, 41a, 42, 42a) eine Strukturbaugruppe bilden, wobei die Strukturbaugruppe mindestens ein horizontales (41, 41a, 42, 42a) und zwei vertikale Strukturbauteile (38, 38a, 38b, 38c) umfasst.

4. Fluggastsitz (3, 4) nach Anspruch 3, **dadurch gekennzeichnet, dass** das Anbindungsorgan (45, 45a) an dem horizontalen Strukturbauteil (42, 42a) angeordnet ist.

5. Fluggastsitz (3, 4)nach einem der vorhergehenden Ansprüche, **dadurch gekennzeichnet, dass** zwischen zwei vertikalen Strukturbauteilen (38, 38a, 38b, 38c) eine Querstrebe (43, 43a) angeordnet ist, wobei die Querstrebe (43, 43a) als u-Profil ausgebildet ist.

6. Fluggastsitz (3, 4) nach Anspruch 5, **dadurch gekennzeichnet, dass** die Querstrebe (43, 43a) von einem Anbindungselement (44, 44a) an mindestens einer Seite berührt wird.

7. Fluggastsitz (3, 4) nach Anspruch 5, **dadurch gekennzeichnet, dass** an dem Anbindungselement (44, 44a) das Anbindungsorgan (46, 46a) für den Sicherheitsgurt angeordnet ist.

8. Fluggastsitz (3, 4) nach einem der vorhergehenden Ansprüche, **dadurch gekennzeichnet, dass** das Anbindungselement (44, 44a) aus einem deformierbaren Material, z.B. Metall besteht, wobei das Anbindungselement (44, 44a)Energie bei einem Crash aufnehmen kann.

9. Fluggastsitz (3, 4) nach einem der vorhergehenden Ansprüche, **dadurch gekennzeichnet, dass** das am Anbindungselement (44, 44a) angeordnete Anbindungsorgan als eine Gurtumlenkung (46, 46a) ausgebildet ist.

10. Fluggastsitz (3, 4) nach einem der vorhergehenden Ansprüche, **dadurch gekennzeichnet, dass** das an dem horizontalen Strukturbauteil (42, 42a) angeordnete Anbindungsorgan als ein Gurtroller (45, 45a) ausgebildet ist.

11. Fluggastsitz (3, 4) nach einem der vorhergehenden Ansprüche, **dadurch gekennzeichnet, dass** es sich bei dem Sicherheitsgurt um einen zusätzlichen Sicherheitsgurt handelt.

12. Sitzreihe (1) bestehend aus mindestens zwei Fluggastsitzen (3, 4) nach einem der vorhergehenden Ansprüche.

## Claims

1. Passenger seat (3, 4) having a frame intended for securing to a floor of a passenger cabin, wherein the frame comprises a seat divider (37, 37a, 37b, 37c) and beams (35, 36) that run transverse to the seat direction, wherein the seat divider (37, 37a, 37b, 37c) is held by the beams (35, 36), wherein a housing (7, 11) is disposed on the seat divider (37, 37a, 37b, 37c), wherein the housing (7, 11) at least partly surrounds a backrest (6) of the passenger seat (3, 4), wherein the backrest is movable relative to the housing in the region of the housing, with the housing being fixed when the backrest is moved, wherein a structure component (38, 38a, 38b, 38c) is disposed on the seat divider (37, 37a, 37b, 37c), with an attachment unit (45, 45a) for a safety belt for a passenger being disposed on the structure component (42, 42a).

2. Passenger seat (3, 4) according to Claim 1, **characterized in that** two attachment units (45, 45a, 46, 46a) for the safety belt are disposed on the housing (7, 11) .

3. Passenger seat (3, 4) according to either of the preceding claims, **characterized in that** multiple structure components (38, 38a, 38b, 38c, 41, 41a, 42, 42a) form a structure assembly, wherein the structure assembly comprises at least one horizontal (41, 41a, 42, 42a) and two vertical structure components (38, 38a, 38b, 38c).

4. Passenger seat (3, 4) according to Claim 3, **characterized in that** the attachment unit (45, 45a) is disposed on the horizontal structure component (42, 42a) .

5. Passenger seat (3, 4) according to any of the preceding claims, **characterized in that** a crossbeam (43, 43a) is disposed between two vertical structure components (38, 38a, 38b, 38c), with the crossbeam (43, 43a) taking the form of a u-shaped profile.

6. Passenger seat (3, 4) according to Claim 5, **characterized in that** the crossbeam (43, 43a) is contacted on at least one side by an attachment element (44, 44a).

7. Passenger seat (3, 4) according to Claim 5, **characterized in that** the attachment unit (46, 46a) for the safety belt is disposed on the attachment element (44, 44a).

8. Passenger seat (3, 4) according to any of the preceding claims, **characterized in that** the attachment element (44, 44a) consists of a deformable material, for example metal, wherein the attachment element (44, 44a) can absorb energy in the event of a crash.

9. Passenger seat (3, 4) according to any of the preceding claims, **characterized in that** the attachment unit disposed on the attachment element (44, 44a) takes the form of a belt deflector (46, 46a).

10. Passenger seat (3, 4) according to any of the preceding claims, **characterized in that** the attachment unit disposed on the horizontal structure component (42, 42a) takes the form of a belt roller (45, 45a).

11. Passenger seat (3, 4) according to any of the preceding claims, **characterized in that** the safety belt is an additional safety belt.

12. Row of seats (1) consisting of at least two passenger seats (3, 4) according to any of the preceding claims.

## Revendications

1. Siège de passager {3, 4) comprenant un cadre qui est prévu pour être fixé à un plancher d'une cabine de passagers, le cadre comprenant un séparateur de sièges (37, 37a, 37b, 37c) et des barres (35, 36) s'étendant transversalement à la direction du siège, le séparateur de sièges (37, 37a, 37b, 37c) étant maintenu par les barres (35, 36), une coque (7, 11) étant disposée sur le séparateur de sièges (37, 37a, 37b, 37c), la coque (7, 11) entourant au moins partiellement un dossier (6) du siège de passager (3, 4), le dossier étant guidé de manière mobile dans la zone de la coque par rapport à la coque, la coque étant immobile lorsque le dossier bouge, un élément structurel (38, 38a, 38b, 38c) étant disposé sur le séparateur de sièges (37, 37a, 37b, 37c), un organe de raccordement (45, 45a) destiné à une ceinture de sécurité d'un passager étant disposé sur l'élément structurel (42, 42a).

2. Siège de passager (3, 4) selon la revendication 1, **caractérisé en ce que** deux éléments de raccordement (45, 45a, 46, 46a) destinés à la ceinture de sécurité sont disposés sur la coque (7, 11).

3. Siège de passager (3, 4) selon l'une des revendications précédentes, **caractérisé en ce que** plusieurs éléments structurels (38, 38a, 38b, 38c, 41, 41a, 42, 42a) forment un ensemble structurel, l'ensemble structurel comprenant au moins un élément structurel horizontal (41, 41a, 42, 42a) et deux éléments structurels verticaux (38, 38a, 38b, 38c).

4. Siège de passager (3, 4) selon la revendication 3, **caractérisé en ce que** l'élément de raccordement (45, 45a) est disposé sur l'élément structurel horizontal (42, 42a).

5. Siège de passager (3, 4) selon l'une des revendications précédentes, **caractérisé en ce qu'**une traverse (43, 43a) est disposée entre deux éléments structurels verticaux (38, 38a, 38b, 38c), la traverse (43, 43a) étant conçu sous la forme d'un profil en U.

6. Siège de passager (3, 4) selon la revendication 5, **caractérisé en ce que** la traverse (43, 43a) est en contact avec un élément de raccordement (44, 44a) sur au moins un côté.

7. Siège de passager (3, 4) selon la revendication 5, **caractérisé en ce que** l'organe de raccordement (46, 46a) destiné à la ceinture de sécurité est disposé sur l'élément de raccordement (44, 44a).

8. Siège de passager (3, 4) selon l'une des revendications précédentes, **caractérisé en ce que** l'élément de raccordement (44, 44a) est en une matière déformable, par exemple un métal, l'élément de raccordement (44, 44a) pouvant absorber de l'énergie en cas de collision.

9. Siège de passager (3, 4) selon l'une des revendications précédentes, **caractérisé en ce que** l'organe de raccordement disposé sur l'élément de raccordement (44, 44a) est conçu comme un renvoi de ceinture (46, 46a).

10. Siège de passager (3, 4) selon l'une des revendications précédentes, **caractérisé en ce que** l'organe de raccordement disposé sur l'élément structurel horizontal (42, 42a) est conçu sous la forme d'un enrouleur de ceinture (45, 45a).

11. Siège de passager (3, 4) selon l'une des revendications précédentes, **caractérisé en ce que** la ceinture de sécurité est une ceinture de sécurité supplémentaire.

12. Rangée de sièges (1) comprenant au moins deux sièges de passager (3, 4) selon l'une des revendications précédentes.
